# EUROPEAN PATENT SPECIFICATION

(11) **EP 3 662 706 B1**
(45) Date of publication and mention of the grant of the patent: **10.04.2024**
(21) Application number: 17919730.6
(22) Date of filing: 31.07.2017
(51) Int. Cl.: H04W 72/02

(54) **METHODS AND COMPUTING DEVICE FOR CARRYING OUT WIRELESS DEVICE-TO-DEVICE COMMUNICATION USING SIDELINK CARRIER AGGREGATION**
VERFAHREN UND RECHNERVORRICHTUNG ZUR DURCHFÜHRUNG EINER DRAHTLOSKOMMUNIKATION ZWISCHEN VORRICHTUNGEN MITTELS SIDELINK-TRÄGERAGGREGATION
PROCÉDÉS ET DISPOSITIF INFORMATIQUE POUR L'EXÉCUTION D'UNE COMMUNICATION SANS FIL DE DISPOSITIF À DISPOSITIF À L'AIDE D'UNE AGRÉGATION DE PORTEUSES DE LIAISON LATÉRALE

(43) Date of publication of application: 10.06.2020
(73) Proprietor: ZTE Corporation, Shenzhen, Guangdong 518057 (CN)
(72) Inventor: CHEN, Yuqin, Shenzhen Guangdong 518057 (CN); CHEN, Lin, Shenzhen Guangdong 518057 (CN); WANG, Mengzhen, Shenzhen Guangdong 518057 (CN)
(74) Representative: Vossius & Partner Patentanwälte Rechtsanwälte mbB
(86) International application number: PCT/CN2017/095201
(87) International publication number: WO 2019/023857

(56) References cited:
- WO-A1-2015/173187
- US-A1- 2013 308 490
- US-A1- 2014 247 802
- HUAWEI ET AL: "Discussion on carrier aggregation for R15 sidelink", 3GPP DRAFT; R1-1707034, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou, China; 20170515 - 20170519 14 May 2017 (2017-05-14), XP051272264, Retrieved from the Internet: URL:http://www.3gpp.org/ftp/Meetings_3GPP_ SYNC/RAN1/Docs/ [retrieved on 2017-05-14]
- QUALCOMM INCORPORATED: "RRM Requirements for D2D", 3GPP DRAFT; R4-145189, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Dresden, Germany; 20140818 - 20140822 17 August 2014 (2014-08-17), XP050799725, Retrieved from the Internet: URL:http://www.3gpp.org/ftp/Meetings_3GPP_ SYNC/RAN4/Docs/ [retrieved on 2014-08-17]

## Description

### TECHNICAL FIELD

The present disclosure is related generally to wireless communication and, more particularly, to a method and computing device for carrying out wireless device-to-device communication using sidelink carrier aggregation.

### BACKGROUND

Carrier aggregation via the Uu interface is a feature in currently-existing wireless communication technology. One of the purposes of CA is to provide high data throughput between the base station and the UE by using multiple carriers. In current implementations of CA, one of the multiple carriers is known as the PCC and its purpose is to maintain the RRC connection between the UE and base station. Other carriers (e.g., the SCC) are regarded as resources to be used to increase throughput. RRC signaling is used to support this feature, e.g., Scell Addition and Scell Release. These existing schemes are inadequate to support some of the more advanced carrier aggregation techniques that newer wireless technologies have to offer 3GPP contribution R1-1707034 discloses carrier aggregation in Sidelink communication.

### DRAWINGS

The invention is defined by the independent claims. Embodiments are defined by the dependent claims. While the appended claims set forth the features of the present techniques with particularity, these techniques, together with their objects and advantages, may be best understood from the following detailed description taken in conjunction with the accompanying drawings of which:
FIG. 1A, FIG. 1B, and FIG. 1C are diagrams of systems in which various embodiments of the disclosure are implemented.
FIG. 2 shows an example hardware architecture, according to an embodiment.
FIG. 3 depicts a process in which an SL CA is configured by a UE (Successful Configuration), according to an embodiment.
FIG. 4 depicts a process in which an SL CA is configured by a UE (Successful Configuration), according to an embodiment.
FIG. 5 depicts a process in which an SL CA is configured by a UE (Configuration Failure), according to an embodiment.
FIG. 6 depicts a process in which an SL CA Configuration Complete Notification is transmitted to a base station, according to an embodiment.
FIG. 7 depicts a process in which an SL CA is configured by a base station (intra base station case), according to an embodiment.
FIG. 8 depicts a process in which an SL CA is configured by a base station (inter-base station case), according to an embodiment.
FIG. 9 depicts a process in which an SL CA is configured by a base station, according to an embodiment.
FIG. 10 depicts a process in which a UE provides the carrier information, according to an embodiment.
FIG. 11 depicts a process in which a base station provides the SL carrier information, according to an embodiment.
FIG. 12 depicts a process in which a base station provides the SL carrier information by broadcast, according to an embodiment.
FIG. 13 depicts a process in which one or both UEs transmit capability information to the other, according to an embodiment.
FIG. 14 depicts a process in which one or both UEs transmit their SL capability information to the other via base station (intra base station), according to an embodiment.
FIG. 15 depicts a process in which one or both UEs transmit their SL capability information to the other via base station (inter base station), according to an embodiment.
FIG. 16 depicts a process in which a base station provides the SL CA configuration information for one specific UE, according to an embodiment.
FIG. 17 depicts a process in which a base station provides the SL carrier information by broadcast, according to an embodiment.
FIG. 18 depicts a process in which the UE itself provides the SL CA configuration, according to an embodiment.
FIG. 19 depicts a process in which a control entity provides the SL CA configuration information for one specific UE, according to an embodiment.
FIG. 20 depicts a process in which a UE itself provides the SL CA configuration, according to an embodiment.
FIG. 21 depicts an HO procedure with SL CA configuration, according to an embodiment
FIG. 22 depicts a process in which the P-SL used by UEs during D2D communication is changed, according to an embodiment.
FIG. 23 depicts a process in which a first UE sends a measurement report to a second UE and the second UE response with a P-SL Change, according to an embodiment.
FIG. 24. depicts a process in which a first UE transmits a P-SL change message to a second UE via base station (intra base station, triggered by UE), according to an embodiment.
FIG. 25 depicts a process in which a first UE transmits a P-SL change message to a second UE via base station (inter base station), according to an embodiment.
FIG. 26 depicts a process in which a base station transmits a P-SL change request to multiple UEs (intra base station, triggered by base station), according to an embodiment.
FIG. 27 depicts a process in which a first UE transmits an S-SL Addition to a second UE, according to an embodiment.

### DESCRIPTION

The disclosure is generally directed to a method for carrying out wireless device-to-device communication In various embodiments, the method involves: a first user equipment transmitting a sidelink carrier aggregation configuration to a second user equipment (either directly or via a base station); and the first user equipment communicating directly with the second user equipment on a plurality of sidelink carriers in accordance with the sidelink carrier aggregation configuration.

According to an embodiment, the UE also transmits, to a base station, ta notification message that includes one or more of: information regarding the frequencies of the one or more carriers, information regarding a deactivation timer, an identifier of the second user equipment, a communication destination identifier, and an identifier of a group of user equipments.

In an embodiment, the first user equipment transmits, to the second user equipment, an inquiry regarding a capability of the second user equipment to communicate using direct device-to-device communication with carrier aggregation and receives such information from the second user equipment in response to the inquiry. The capability information includes one or more of a sidelink band combination, whether transmit is supported on a sidelink carrier, and whether receive is supported on a sidelink carrier. A sidelink band combination includes, for example, a list of carriers on which the user equipment can operate simultaneously and each carrier's bandwidth.

In an embodiment, a base station carries out the following actions: receiving, from a first user equipment, a side link carrier aggregation configuration; and transmitting the sidelink carrier aggregation configuration to a second user equipment

According to an embodiment, a handover operation is carried out as follows: during a handover of a user equipment from a source base station to a target base station, the target base station receives a sidelink carrier aggregation configuration of the user equipment and transmits the sidelink carrier aggregation configuration to the user equipment.

In an embodiment, the target base station receives a handover request from the source base station, reconfigures transmit or receive component carriers used by the user equipment for sidelink carrier aggregation, includes information regarding the reconfigured transmit or receive component carriers in the sidelink carrier aggregation configuration transmitted to the user equipment.

According to an embodiment, the base station configures one or more of: which resource allocation mode is to be used on each component carrier, a transmit or receive resource pool configuration of each component carrier, and whether cross carrier scheduling is supported.

According to an embodiment, the sidelink carrier aggregation configuration includes one or more of: sidelink carrier aggregation capability information, identities of peer user equipment with which the user equipment has ongoing sidelink carrier aggregation communication, sidelink carrier addition information, sidelink carrier change information, sidelink carrier release information, primary sidelink carrier configuration information, and the results of a measurement of a sidelink carrier

In an embodiment, the sidelink carrier aggregation configuration transmitted by a user equipment (or by a base station) includes, for each component carrier: one or more of a receive/transmit indicator, a sidelink indicator, a carrier component aggregation type, a vehicle-to-anything service type, a synchronization type, sidelink index, sidelink carrier index, sidelink transmission resource allocation information, sidelink reception resource pool information, and validation time of the aggregation configuration.

Table 1 lists various abbreviations used in the present disclosure, along with their expanded forms.

**Table 1**

| **Abbreviation** | **Expansion** |
|---|---|
| ACK | Acknowledge |
| AMF | Access Management Function |
| ARQ | Automatic Repeat Request |
| AS | Access Stratum |
| BSR | Buffer Status Report |
| CA | Carrier Aggregation |
| CE | Control Element |
| D2D | Device-to-Device |
| DFN | D2D system Frame Number |
| DRX | Discontinuous Reception |
| eNB | Enhanced Node B |
| eV2X | enhanced Vehicle-to-Everything |
| GNSS | Global Navigation Satellite System |
| GUTI | Globally Unique Temporary Identifier |
| HARQ | Hybrid Automatic Repeat Request |
| HO | Handover |
| HSS | Home Subscriber Server |
| IP | Internet Protocol |
| MAC | Media Access Control |
| MIB | Master Information Block |
| MME | Mobility Management Entity |
| NAS | Non-Access Stratum |
| PCell | Primary Cell |
| PCC | Primary Carrier Component |
| PDCP | Packet Data Convergence Protocol |
| PDN | Packet Data Network |
| PGW | Packet Gateway |
| PHR | Power Headroom Report |
| P-SL | Primary Sidelink |
| ProSe | Proximity Services |
| RAN | Radio Access Network |
| RAT | Radio Access Technology |
| RLC | Radio Link Control |
| RRC | Radio Resource Control |
| RX | Receive |
| SCell | Secondary Cell |
| SCC | Secondary Carrier Component |
| SGW | Serving Gateway |
| SL | Sidelink |
| SM | Session Management |
| SMF | Session Management Function |
| SN | Sequence Number |
| S-SL | Secondary Sidelink |
| TDD | Time Division Duplex |
| TX | Transmit |
| UE | User Equipment |
| UPF | User Plane Function |
| V2X | Vehicle-to-Everything |

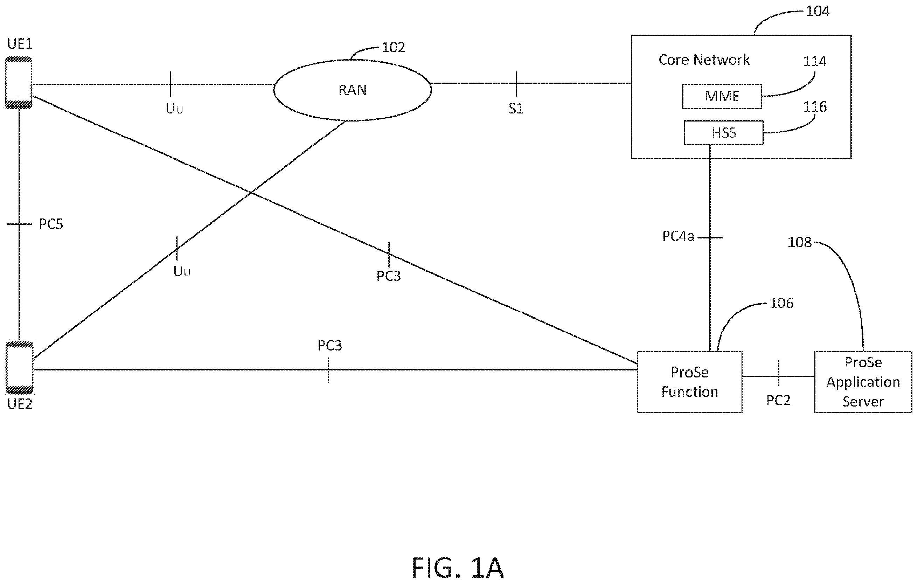

Turning to FIG. 1A, the interaction between UEs and between each individual UE and a telecommunication system in a D2D context will now be described. The system 100 includes a RAN 102, a core network 104, a proximity services ("ProSe") function (e.g., software executing on one or more servers) 106, and a ProSe application server 108. The various components communicate with one another via interfaces or "reference points." For example, a first UE (UE1) and a second UE (UE2) communicate with one another through a PC5 reference point, both UEs communicate with the RAN 102 through a Uu reference point, the UEs communicate with the ProSe function 106 through a PC3 reference point, the RAN 102 communicates with the core network 104 through an S1 reference point, the core network 104 communicates with the ProSe function 106 through a PC4a reference point, and the ProSe function communicates with the ProSe application server 108 through a PC2 reference point.

The RAN 102 includes multiple communication nodes, including cellular base stations (such as an evolved node B). The core network 104 includes components that support the RAN 102, such an MME 114 (e.g., software executing on a computing device such as a server). The MME 114 carries out such functions as signalling and security inter-node signalling for mobility between access networks, tracking area list management, gateway selection, roaming, authentication, and bearer management functions. The core network 104 also includes an HSS 116. The HSS 116 maintains a database of network subscribers. The interaction between the MME 114 and HSS 116 in an embodiment is as follows: The MME informs the HSS 116 of the location of a mobile station managed by the HSS 116. The HSS 116 sends, to the MME, all the data needed to support services to the mobile subscriber. Exchanges of data between the MME 114 and the HSS 116 may occur when the mobile subscriber needs a particular service, when the subscriber wants to change some data associated with their subscription, or when some parameters of the subscription are modified.

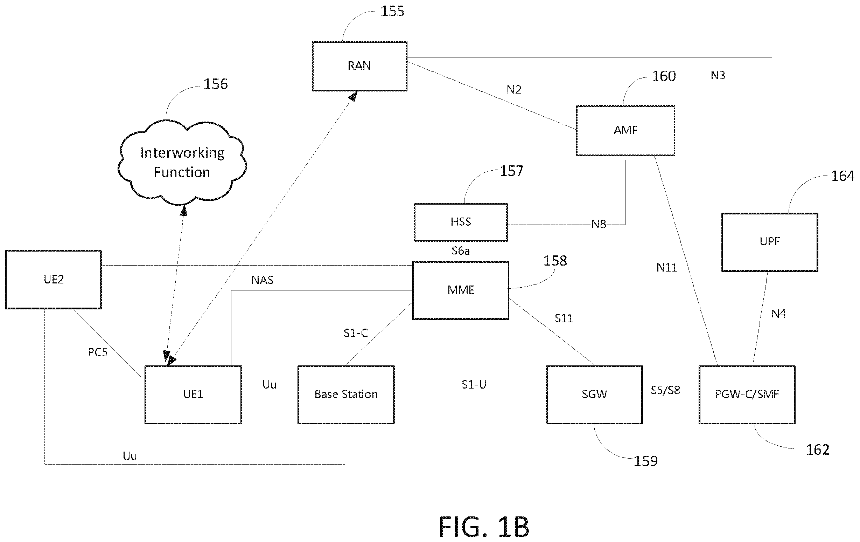

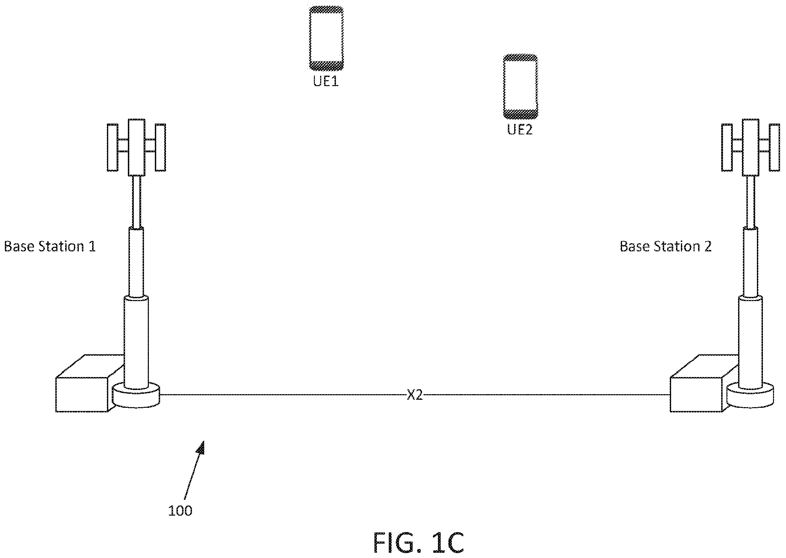

Turning to FIG. 1B, another wireless communication system in which the various embodiments may be deployed is shown. In FIG. 1, there is depicted UE1, UE2, a base station 154, a RAN 155, an interworking function 156, an HSS 157, an MME 158, an SGW 159, an AMF 160, an SMF/PGW-C 162, and a UPF 164. These various components (each of which operates on at least one computing device) communicate with one another via interfaces denoted by the lines between them, including the N2, N4, N8, and N11 reference points, the NAS, and the Uu, S1-U, S1-C, S5/S8, S6a, and S11 interfaces.

In an embodiment, the MME 158 carries out the following functions for the network that it serves: tracking and paging, bearer activation and deactivation, selecting the SGW for a UE during initial attachment, authenticating a user (using the HSS 177) during handover, serving as the termination point for all NAS signaling, and generating the GUTI.

According to an embodiment, the SGW 159 acts as an interface for signalling between the PGW (part of block 162) and the MME 158. Each UE is served by a single SGW at a time. The SGW also handles IP packets between the PGW and the base station.

According to an embodiment, the AMF 160 (i.e., a computing device executing software that carries out the AMF) carries out one or more of the following procedures in support of the RAN 155: registration management, connection management, reachability management and mobility management. The AMF 160 also carries out access authentication and access authorization, acts as the NAS security termination, and relays the SM NAS between UE1 or UE2 and the SMF, etc. NAS is a layer over which communication between the UEs and the core network takes place.

In an embodiment, the SMF (part of the PGW-C/SMF block 162) carries out session management (e.g., for PDU sessions), allocates IP addresses to UEs, and selects and controls the UPF 164 for data transfer. If a UE 152 has multiple PDU sessions, different SMFs may be allocated to each session to manage. The PGW-C (also part of block 162) is the control plane that serves as the termination point of the packet data interface with respect to the PDN. It also serves as an anchor point for sessions with external PDNs.

The UPF 164 (i.e., a computing device executing software that carries out the UPF) carries out procedures in support of RANs such as: acting as an anchor point for mobility between and within RATs, packet routing and forwarding, traffic usage reporting, quality-of-service handling for the user plane, downlink packet buffering, downlink data notification triggering, etc.

The RANs of FIG. 1A and FIG. 1B includes multiple base stations, two of which are depicted in FIG. 1C-base station 1 and base station 2. The base stations communicate with one another via an X2 interface using a physical medium such as fiber optic cable. For the purposes of the examples that follow, if only a single UE is referred to, it is assumed to be UE1. Similarly, if only a single base station is referred to, it is assumed to be base station 1. This is for convenient reference only, and the two base stations are merely intended to be representative.

The system 100 has many components that are not depicted in FIG. 1A and FIG. 1B, including other base stations, other UEs, wireless infrastructure, wired infrastructure, and other devices commonly found in LTE networks. Example implementations of the UEs include any device capable of wireless communication, such as a smartphone, tablet, laptop computer, and non-traditional devices (e.g., household appliances or other parts of the "Internet of Things"). Examples of base stations include "enhanced node B" and "next generation node B."

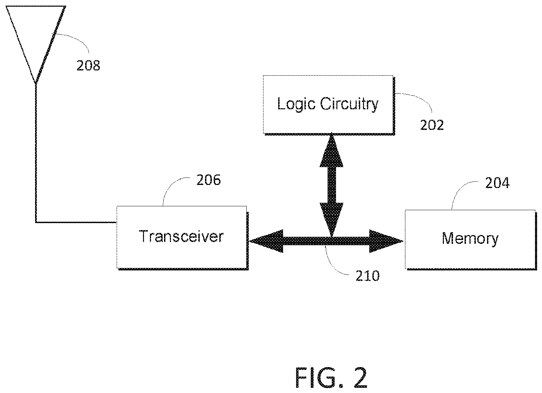

FIG. 2 illustrates a basic (computing device) hardware architecture found in the base stations, UEs, and the computing devices of the support network 104, according to an embodiment They may have other components as well, some of which are common to all of the devices of FIG. 1A, FIG. 1B, and FIG. 1C and others that are not. The hardware architecture depicted in FIG. 2 includes logic circuitry 202, memory 204, transceiver 206, and one more antennas represented by antenna 208. Each of these elements is communicatively linked to one another via one or more data pathways 210. Examples of data pathways include wires, conductive pathways on a microchip, and wireless connections.

The term "logic circuitry" as used herein means a circuit (a type of electronic hardware) designed to perform complex functions defined in terms of mathematical logic. Examples of logic circuitry include a microprocessor, a controller, or an application-specific integrated circuit. When the present disclosure refers to a device carrying out an action, it is to be understood that this can also mean that logic circuitry integrated with the device is, in fact, carrying out the action.

Possible implementations of the memory 204 include: volatile data storage; nonvolatile data storage, electrical memory, magnetic memory, optical memory, random access memory, cache memory, and hard drives.

In order to help illustrate the various embodiments of the disclosure, a general description of schemes used for implementing sidelink carrier aggregation in an implementation of the system 100 will now be described. Other implementations are possible, however.

In current cellular networks, carrier aggregation involves the use of a primary cell or Pcell, and at least one secondary cell or Scell. For the sidelink carrier aggregation techniques disclosed herein, the terms "Pcell" and "Scell" are not suitable This is primarily because, on the SL carrier, there may be no cells deployed at all. Thus, the present disclosure will refer to the P-SL (Primary SL) or PCC for PC5 CA and S-SL (Secondary SL) or SCC for PC5 CA. The concept of P-SL/S-SL discussed herein addresses the scenario in which a SL dedicated carrier is used for SL on which no cell is deployed. However, it should be understood that the P-SL/S-SL terms are not only used for cases without cells but can also be used in the scenarios where the cells are deployed. In addition, to follow the convention, legacy terms PCC for SL and SCC for SL may be used in this disclosure.

In the various embodiments described herein, CCs for PC5 CA could be treated equally, e.g., without discrimination between P-CC and S-CC for SL CA. That is because, for SL, no RRC connection is required to maintain on a specific carrier, e.g., Pcell on legacy CA over Uu. Thus, it is to be understood that P-SL and S-SL are terms of convenience and do not necessarily reflect any sort of differentiation in purpose between different SL carriers.

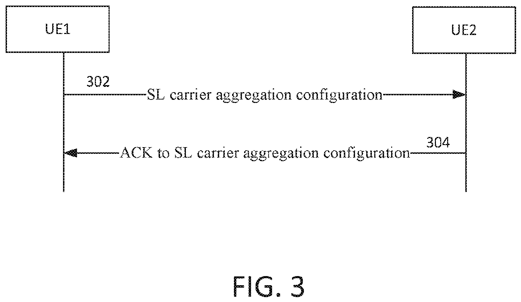

The SL carrier aggregation configuration described in conjunction with FIG. 3 could support configurations like S-SL addition, S-SL release, S-SL change, P-SL change, etc. Each message may include a set of carrier frequency and deactivation timer information. For each SL CC, the message further contains at least one of the following fields: Rx/Tx indicator, P-SL/S-SL indicator, CC aggregation type (for data duplication or data split), V2X service type(s), synchronization type, P-SL index (or carrier index), S-SL index(or carrier index), SL Tx and or Rx resource allocation information, validation time of the configuration, etc. It should be noted that the deactivation timer may also be configured per CC. For the synchronization type, it may be the base station, GNSS or UE. If the synchronization type is set to base station, the SL carrier aggregation configuration may further include the reference carrier. The reference cell ID on the reference carrier may also be included. If the synchronization type is GNSS, the DFN offset may be included in the SL carrier aggregation configuration. In addition, the CCs for PC5 operation may also be divided into several synchronization groups. In that case, the synchronization info could be configured per group.

Optionally, at 304, UE2 transmits an ACK to the SL carrier aggregation configuration. The ACK could be in any form among PC5 control signaling, RLC ARQ ACK, MAC HARQ ACK, or some pre-defined procedure. On the other hand, if the UE2 could not support/accept the SL carrier aggregation configuration, it can optionally send the SL Carrier aggregation configuration reject message to UE1, which may include the reject reasons, such as no available resource, no capability, etc.

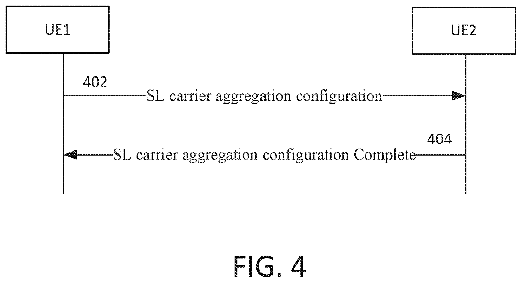

Turning to FIG. 4, another procedure for a successful SL CA configuration, according to an embodiment, will now be described. Step 402 is identical to step 302 described above in conjunction with FIG. 3. At step 404, UE2 responds with an SL carrier aggregation configuration Complete message.

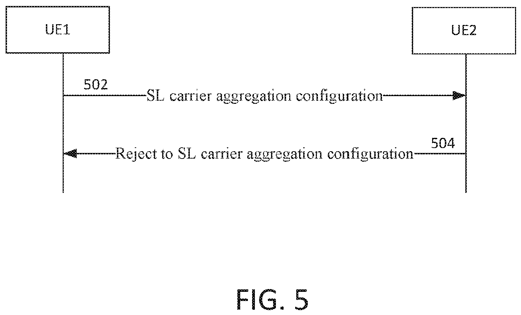

If the UE2 does not accept the SL CA configuration, UE2 may reject it, which is shown in FIG. 5. Step 502 is identical to step 302 described above in conjunction with FIG. 3. At step 504, UE2 responds with a Reject to SL carrier aggregation configuration message.

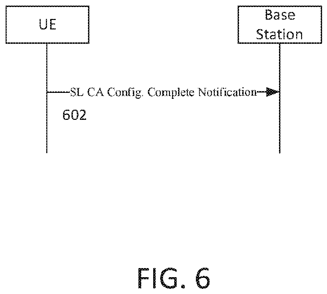

After the PC5 carrier aggregation is configured, the UE may notify the base station about it if the UE is in coverage, as shown in FIG. 6 (step 602). Note that this may apply to both UE1 and UE2 in FIG. 3 and FIG. 4. This Notification message includes at least one of the following: a set of carrier frequency information, deactivation timer, peer UE ID. For each SL CC, it further contains at least one of the following fields: Rx/Tx indicator, P-SL/S-SL indicator, CC aggregation type (for data duplication or data split), V2X service type(s), synchronization type, P-SL index (or carrier index), S-SL index (or carrier index), SL Tx and or Rx resource allocation information, validation time of the configuration. It should be noted that the deactivation timer may also be configured per CC. For the synchronization type, it may be base station, GNSS or UE. If synchronization type is base station, then the SL carrier aggregation complete notification may further include the reference carrier. The reference cell ID on the reference carrier may also be included. If the synchronization type is GNSS, the DFN offset may be included in the SL carrier aggregation complete notification. In addition, the CC for PC5 operation may also be divided into several synchronization groups. In that case, the synchronization info is configured per group.

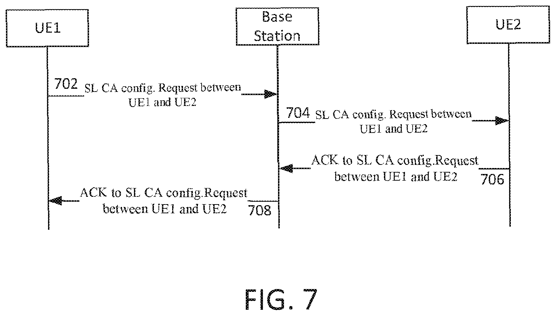

Turning to FIG. 7, in an embodiment, the base station carries out the SL CA configuration. In this embodiment, at step 702, UE1 transmits the SL CA Configuration Request message to the base station. At step 704, the base station forwards it to UE2. The Request message contains at least one of the following (depending on the purpose): destination UE ID, S-SL addition, S-SL release, S-SL change, and P-SL change. For each purpose, the message may include a set of carrier frequency and deactivation timer information. For each carrier, the message further contains at least one of the following fields: Rx/Tx CC indicator, P-SL/S-SL indicator, CC aggregation type (for data duplication or data split), V2X service type(s), synchronization types, S-SL index (or carrier index), SL Tx and Rx resource allocation information, and validation time of the configuration. If the synchronization type is base station, the message may further include the reference carrier. The reference cell ID on the reference carrier may also be included. If the synchronization type is GNSS, the DFN offset may be included. In addition, the CC for PC5 operation may also be divided into several synchronization groups. In that case, the synchronization info is configured per group

Optionally, at step 706, UE2 transmits an ACK to SL carrier aggregation configuration message to the base station. The ACK may take the form of an RRC signaling, RLC ARQ ACK, MAC HARQ ACK, or some pre-defined procedure.

Optionally, at step 708, the base station transmits the ACK to SL carrier aggregation configuration message to UE1. The ACK may take the form of RRC signaling, RLC ARQ ACK, MAC HARQ ACK, or some pre-defined procedure.

When the P-SL and S-SL are not discriminated (i.e., are treated equally), messages like S-SL addition, S-SL release, S-SL change, P-SL change could be re-named SL addition, SL release, and SL change.

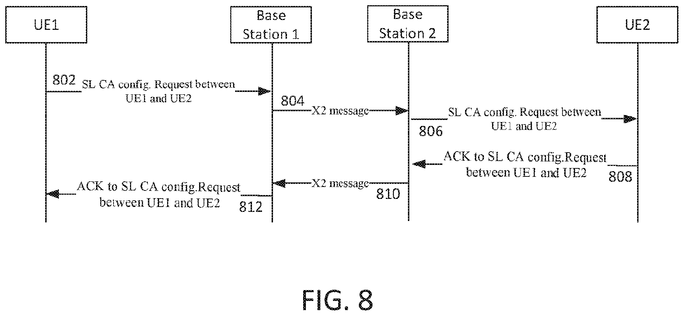

Turning to FIG. 8, in an embodiment, when two UEs are connected to different base stations, the signaling message is transferred between two base stations. At step 802, UE1 sends an SL CA configuration Request for communication between UE1 and UE2, which contains the SL CA configuration (as described in the previous embodiments). At step 804, base station 1 sends an X2 message to base station 2 to deliver the SL CA configuration request from UE1. At step 806, base station 2 sends the message to UE2. At optional steps 808, 810, and 812, the previous messages are acknowledged.

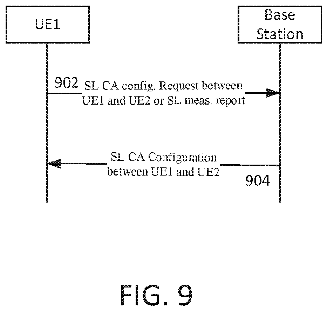

Another more general signaling procedure (according to an embodiment) is shown in FIG. 9. At step 902, UE1 transmits an SL CA configuration Request between UE1 and UE2 (or an SL measurement report) to the base station. In response to receiving SL CA configuration request message from UE1, the base station sends the SL CA configuration message to UE1. In this case, the base station might have known the SL carrier utilization information at the UEs in the cell, and therefore the base station could make the configuration as soon as upon receiving the request message. Note that the first message (the SL CA Configuration Request of step 902) is optional, which means that the base station might provide the SL CA configuration to UE1 unsolicited.

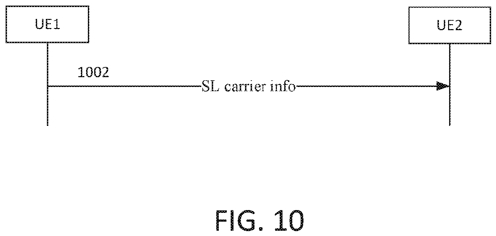

According to an embodiment, prior to UE1 providing the SL CA configuration to UE2 (e.g., in any of the embodiments described herein), UE2 may carry out a measurement to determine the channel quality between UE1 and UE2 on the corresponding carrier. In order to do this, UE2 needs the carrier information. In one embodiment, shown in FIG. 10, UE1 provides the carrier information and/or measurement configuration information to UE2 (at step 1002). The carrier information may include information regarding the carrier frequency or frequencies, SL synchronization information, bandwidth of the carrier(s), TDD configuration information, resource pool information, supported V2X service type on the carrier, etc.

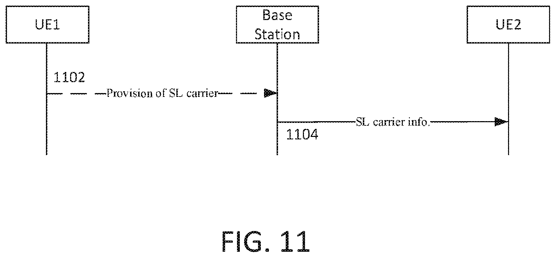

Turning to FIG. 11, in an embodiment, UE1 optionally provides the SL carrier information (and/or the measurement configuration) to the base station (step 1102). At step 1104, the base station provides the carrier information and/or measurement configuration to UE2-either having generated the information by itself or relaying the information received at step 1102. The carrier information may include information such as carrier frequency or frequencies for PC5 operation, SL synchronization information, bandwidth of carrier(s), TDD configuration information, resource pool information, and supported V2X service type on the carrier.

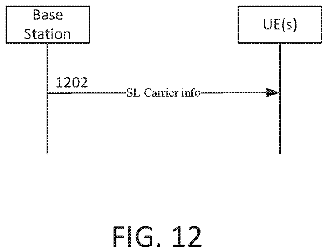

Turning to FIG. 12, in an embodiment, the base station provides generalized SL carrier information to one or more UEs. In this case, the base station broadcasts information regarding the PC5 carrier(s) information to all UE(s). Examples of such information include carrier frequency or frequencies, information for PC5, the V2X service type supported on the carrier, SL synchronization information, bandwidth of carrier, and TDD configuration information, resource pool information. Upon receiving the SL carrier information from base station, the UE starts to monitor the available CC for PC5 according to its interested V2X service type(s).

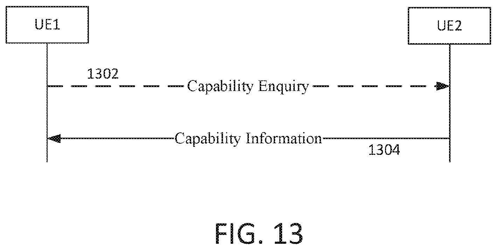

Turning to FIG. 13, according to an embodiment, prior to configuring SL CA, the UEs exchange information regarding their respective SL CA capabilities directly with one another. For example, at step 1304, UE2 transmits its SL CA capability to UE1. Optionally, this step is carried out in response to step 1302, in which UE1 transmits an enquiry to UE2 regarding UE2's SL CA capability information. The capability information includes one or more of the following: SL band combination information, SL and Uu band combination information. The band combination information indicates the list of carriers and each carrier's bandwidth on which UE2 could simultaneously operate. UE2 may also indicate whether it supports both Tx/Rx or only one of Tx and Rx on the carrier. UE2 may also separately report the Tx band combination and Rx band combination.

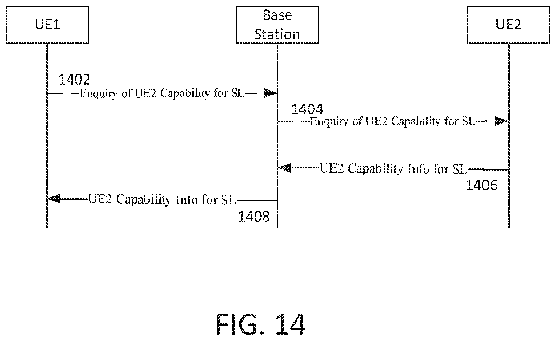

Turning to FIG. 14, in an embodiment, one or both UEs provide the SL CA information to the other (or each other) via the base station. Steps 1406 and 1408 are identical to step 1304 described in conjunction with FIG. 13 except that instead of UE2 providing the information directly to UE1, UE2 provides it to the base station, which then provides it to UE1. Optional steps 1402 and 1404 are identical to optional step 1302 except that instead of UE1 making the equiry directly to UE2, UE1 provides it to the base station, which then provides it to UE2.

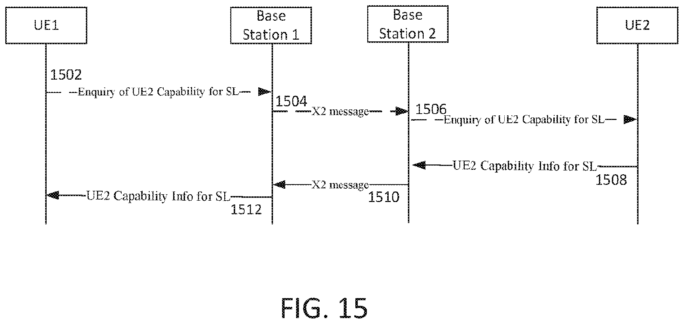

Turning to FIG. 15, in an embodiment, one or both UEs (which do not share an base station) provide the SL CA information to the other (or each other) via their respective base stations, which relay the information via X2 messages. Steps 1508, 1510, and 1512 are identical to step 1304. described in conjunction with FIG. 13 except that instead of UE2 providing the information directly to UE1, UE2 provides it to base station 2, which then provides it to base station 1, which then provides it to UE1. Optional steps 1502, 1504, and 1506 are identical to optional step 1302 except that instead of UE1 making the enquiry directly to UE2, UE1 provides it to base station 1, which provides it to base station 2, which then provides it to UE2.

As previously discussed, the Enquiry message is optional. UE2 may provide its SL CA capability information to UE1. Alternatively, the UE may provide its SL CA capability information to the base station together with its other capabilities upon the request from base station.

When one UE performs broadcast sidelink transmission, it may not be practical to have two peers interact with each other. In another word, it may be that the SL CA configuration information can only be broadcast to all receiving UEs.

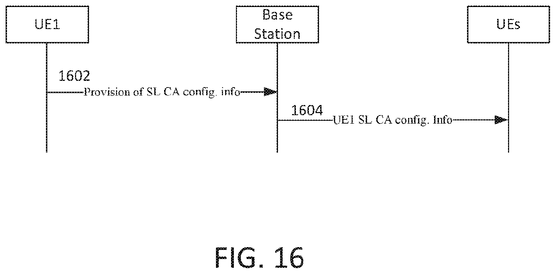

Turning to FIG. 16, in an embodiment, the base station broadcasts the SL CA configuration of one specific UE to all receiving UEs. UE1 provisions its SL carrier aggregation information to base station and base station transfers it to all UEs by RRC signaling on behalf of UE1. Note that base station may deliver it by broadcast RRC signaling or dedicated RRC signaling.

At step 1602, UE1 transmits the SL CA information to the base station. At step 1604, the base station broadcasts the information. The SL CA configuration information may include at least one of the following (depending on the purpose): communication destination ID/destination group ID, S-SL addition, S-SL release, S-SL change, and P-SL change. For each purpose, the message may include a set of carrier frequency and deactivation timer information. For each CC, the message further contains at least one of the following fields: Rx/Tx CC indicator, P-SL/S-SL indicator, CC aggregation type (for data duplication or data split), V2X service type(s), synchronization types, S-SL index (or carrier index), and SL Tx and Rx resource allocation information, validation time of the configuration. If the synchronization type is base station, the message may further include the reference carrier. The reference cell ID on the reference carrier may also be included. If the synchronization type is GNSS, the DFN offset may be included. In addition, the CC for PC5 operation may also be divided into several synchronization groups. In that case, the synchronization info is configured per group.

Upon receiving the UE1 SL CA configuration information, the interested UE would be capable of starting to receive data from UE1 from multiple carriers configured as carrier aggregation.

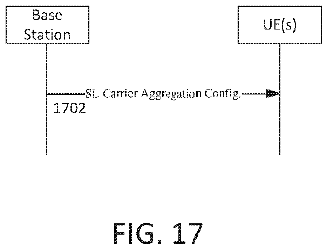

Turning to FIG. 17, in an embodiment, the base station broadcasts all of the CC and service type mapping information (step 1702) to receiving UEs. In this case, base station broadcasts one or more of the PC5 carrier(s) information to all UE(s), e.g. carrier frequency information, the V2X service type supported on the carrier, SL synchronization information, bandwidth of carrier, TDD configuration information, and the resource pool information. Upon receiving the SL carrier information from base station, UE starts to monitor the available CC for PC5 according to its interested V2X service type and Rx capability

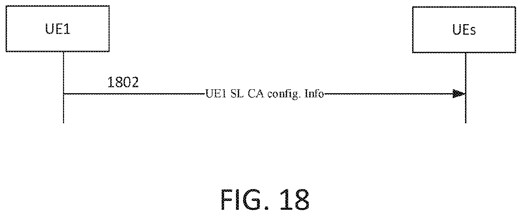

Turning to FIG. 18, in an embodiment, UE1 broadcasts its SL CA configuration to all receiving UEs (step 1802). In doing so, UE1 provisions its SL carrier aggregation information by broadcast SL signaling, such as by SL-MTB or broadcast PC5 control signaling. This info may be delivered periodically. In each message, it may comprise of at least one of the following according to different purposes: communication destination ID/destination group ID, S-SL addition, S-SL release, S-SL change, P-SL change, etc. For each purpose, the message may comprise of a set of carrier frequency and deactivation timer information. For each CC, it further contains at least one of the following fields: Rx/Tx CC indicator, P-SL/S-SL indicator, CC aggregation type (for data duplication or data split), V2X service type(s), synchronization types, S-SL index (or carrier index), SL Tx and Rx resource allocation information, validation time of the configuration, etc. If synchronization type is base station, it may further include the reference carrier. The reference cell ID on the reference carrier may also be included. If the synchronization type is GNSS, the DFN offset may be included. In addition, the CC for PC5 operation may also be divided into several synchronization groups. In that case, the synchronization info is configured per group.

Upon receiving the UE1 SL CA configuration information, the interesting UEs would be capable to start receiving data from UE1 from multiple carriers configured as carrier aggregation.

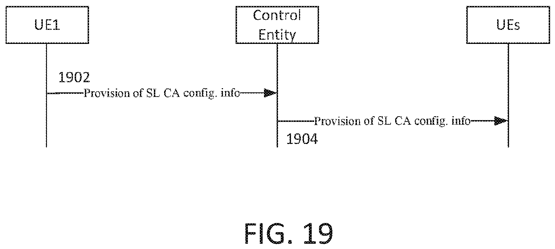

Turning to FIG. 19, in an embodiment, a control entity broadcasts the SL CA configuration of one specific UE to all receiving UEs/UEs within a multicast group. The multicast group over PC5 is managed by a control entity, such as computing device executing software that carries out a ProSe Function or service server. The UE transmits its SL carrier aggregation information to the control entity (step 1902), which in turn transmits the information to the interested receiving UE or multicast group member UEs (step 1904). The SL CA configuration message may include one or more of the following (depending on the purpose): communication destination ID/destination group ID, S-SL addition, S-SL release, S-SL change, and P-SL change. For each purpose, the message may include of a set of carrier frequency and deactivation timer information. For each CC, the message further contains at least one of the following fields: Rx/Tx CC indicator, P-SL/S-SL indicator, CC aggregation type (for data duplication or data split), V2X service type(s), synchronization types, S-SL index (or carrier index), SL Tx and Rx resource allocation information, and validation time of the configuration. If the synchronization type is base station, it may further include the reference carrier. The reference cell ID on the reference carrier may also be included. If the synchronization type is GNSS, the DFN offset may be included. In addition, the CC for PC5 operation may also be divided into several synchronization group. In that case, the synchronization info is configured per group.

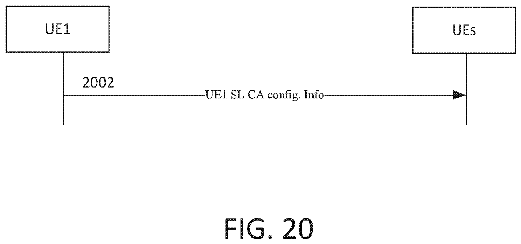

Turning to FIG. 20, in an embodiment, UE1 transmits (multicasts) its SL CA configuration information to UEs belonging to the same group (step 2002). In other words, UE1 provisions its SL carrier aggregation information by multicast SL signaling message. In one implementation, UE1 could carry this out by addressing the group destination ID in the packet. Each copy of the message includes at least one of the following (depending upon the purpose): communication destination ID/destination group ID, S-SL addition, S-SL release, S-SL change, and P-SL change. For each purpose, the message may include a set of carrier frequency and deactivation timer information. For each CC, the message further contains at least one of the following fields: Rx/Tx CC indicator, P-SL/S-SL indicator, CC aggregation type (for data duplication or data split), V2X service type(s), synchronization types, S-SL index (or carrier index), SL Tx and Rx resource allocation information, and validation time of the configuration. If the synchronization type is base station, the message may further include the reference carrier. The reference cell ID on the reference carrier may also be included. If the synchronization type is GNSS, the DFN offset may be included. In addition, the CC for PC5 operation may also be divided into several synchronization group. In that case, the synchronization info is configured per group. Upon receiving the UE1 SL CA configuration information, the interested UEs would be capable of receiving data from UE1 from multiple carriers configured according to carrier aggregation.

In case of a HO scenario, the source base station may provide the SL CA configuration of the UE to the target base station via HO request during HO procedure. The SL CA configuration includes at least one of the following fields: SL CA capability info, the peer UE ID(s) of those UEs with which the UE undergoing handover has ongoing SL CA communication, communication destination ID/destination group ID, and the corresponding S-SL addition/S-SL change/S-SL release/P-SL configuration, the measurement result of P-SL and or S-SL. Upon receiving the HO request from source base station, the target base station may reconfigure the Tx/Rx CC for UE's SL CA operation and deliver this SL CA configuration through the HO response message to UE. In addition, the base station may configure which resource allocation mode should be used on each CC. Optionally, the Rx/Tx resource pool configuration of each CC, whether cross carrier scheduling is supported, the CC that should be used to receive/transmit SA are also indicated.

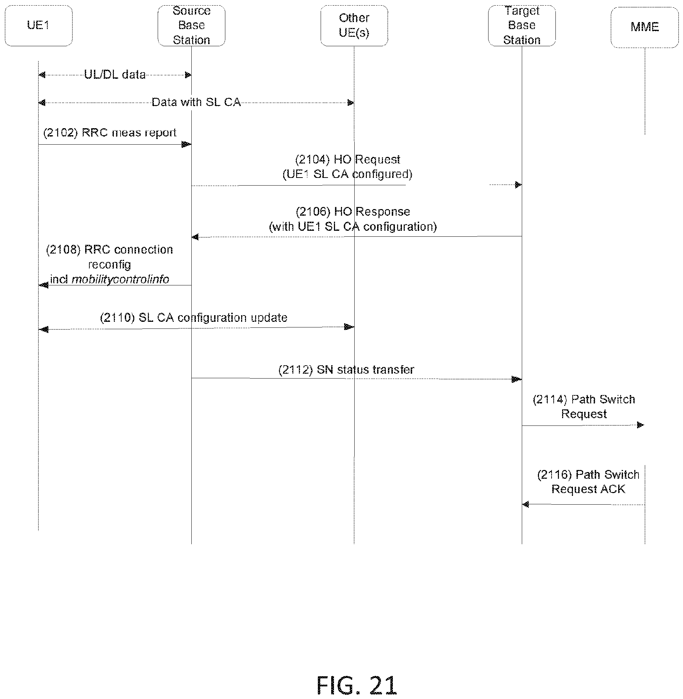

Turning to FIG. 21, an example of a handover procedure that gets carried out in an embodiment will now be described. At step 2102, UE1 transmits an RRC measurement report to the source base station. At step 2104, the source base station transmits a handover request to the target base station. The handover request includes the SL CA configuration for UE1. At step 2106, the target base station transmits a handover response to the source base station. At step 2108, the source base station transmits an RRC connection reconfiguration message to UE1, which contains mobility control information. At step 2110, UE1 and the one or more other UEs with which UE1 is engaging in D2D communication update one another (to the extent necessary) regarding the SL CA configuration. At step 2112, the source base station transmits an SN status transfer message to the target base station. At step 2114, the target base station transmits a path switch request to the MME. At step 2116, the MME acknowledges the path switch request.

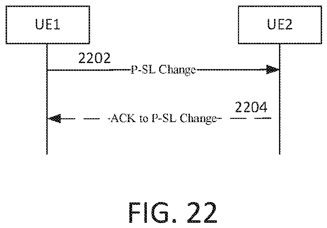

Turning to FIG. 22, in an embodiment, UE1 may change the P-SL if necessary. In this case, the SL CA configuration that includes P-SL change could be exchanged between the two UEs. Suppose, for example, that UE1 detects that the current P-SL deteriorates (such as if the measurement result of the link is lower than a given threshold). In response, UE1 may initiate the change of P-SL by transmitting a P-SL change message to UE2 (step 2202). The message includes at least one of the following: new P-SL carrier frequency information, the configuration on new P-SL, for example, PDCP/RLC/MAC configurations, V2X service type(s), synchronization types, and SL Tx and Rx resource allocation information. Optionally, UE2 can transmit an ACK message (step 2204). Examples of the form that the ACK could take include PC5 control signaling, RLC ARQ ACK, MAC HARQ ACK, or some pre-defined procedure.

The SL, CA configuration that includes P-SL change could be delivered through original PCC. After transmitting the SL CA configuration that includes P-SL change, the UE1 no longer transmits via the original PCC. If the ACK is received, the UE1 stops monitoring on the original PCC. The subsequent PC5 control signaling will be delivered through the new PCC.

On the other hand, if the PCC deteriorates too quickly to exchange the SL CA configuration that includes the P-SL change, it is necessary for the UE1 to deliver the SL CA configuration that includes P-SL change through the newly selected PCC and transmit the relevant configuration information regarding the new PCC to UE2

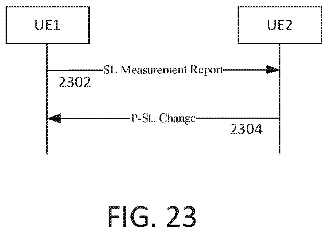

Turning to FIG. 23, another procedure for supporting P-SL according to an embodiment will now be described. At step 2302, UE1 provides the SL measurement report to UE2. The measurement report may: include the measurement result for a better link between UE1 and UE2, indicate that the original P-SL becomes worse than a pre-defined threshold, or indicate that another SL is better than the original P-SL link with a pre-defined offset. These pre-defined threshold and offset may be configured by eNB when UE is in coverage or pre-configured when UE is out of coverage. At step 2304, UE2 transmits a P-SL change message to UE1.

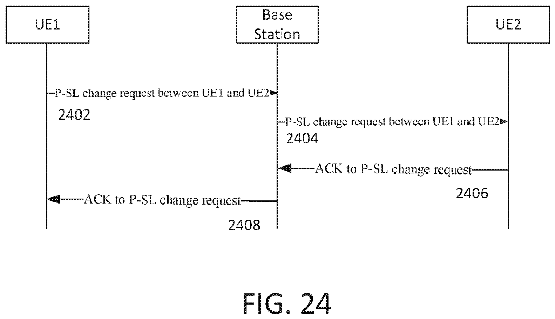

Turning to FIG. 24, an example of how the P-SL change request message and ACK thereto are exchanged between the UEs via the base station in an embodiment will now be described. In this case, the P-SL change request is triggered by UE1. At step 2402, UE1 transmits a P-SL change request to the base station. At step 2404, the base station transmits the P-SL change request to UE2. Optionally, at step 2406 UE2 transmits, to the base station, an ACK to the change request, and the base station transmits a similar ACK to UE1 (step 2408). The P-SL change request message includes at least one of the following: peer UE ID, new P-SL carrier frequency information, the configuration on new P-SL, for example, PDCP/RLC/MAC configurations, V2X service type(s), synchronization types, and SL Tx and Rx resource allocation information.

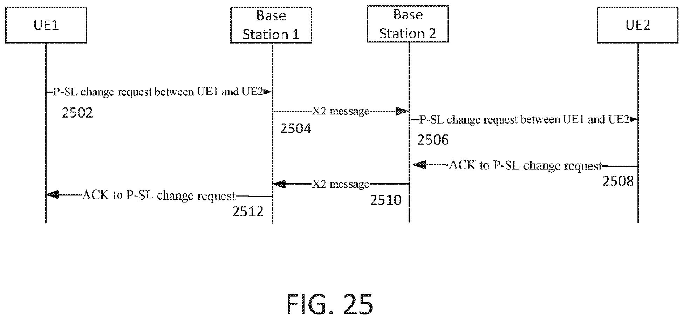

Turning to FIG. 25, an example of how the P-SL change request message and ACK thereto are exchanged between UEs according to another embodiment will now be described. In this example, the UEs are attached to different base stations. At step 2502, UE1 sends a P-SL change request to the first base station. At step 2504, the first base station sends an X2 message to the second base station, requesting the second base station to deliver the SL CA configuration request from UE1. At step 2506, the second base station sends the message to UE2. At optional steps 2508, 2510, and 2512, the previous messages are acknowledged.

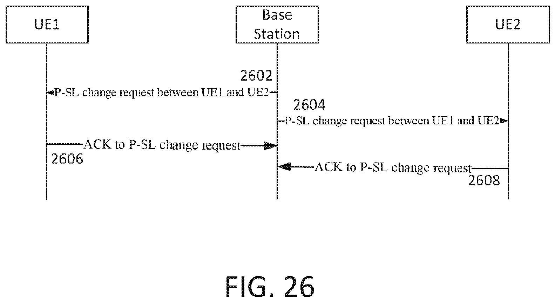

Turning to FIG. 26, an example of how the P-SL change is initiated and managed by the base station according to an embodiment will now be described. In this example, the UEs are attached to the same base station. At step 2602, the base station transmits a P-SL change request message to UE1. At step 2604, the base station transmits a P-SL change request message to UE2. Each message includes at least one of: peer UE ID, new P-SL carrier frequency information, the configuration on new P-SL, for example, PDCP/RLC/MAC configurations, V2X service type(s), synchronization types, and SL Tx and Rx resource allocation information. Optionally, at steps 2606 and 2608, UE1 and UE2 each transmit respective ACK messages to the base station.

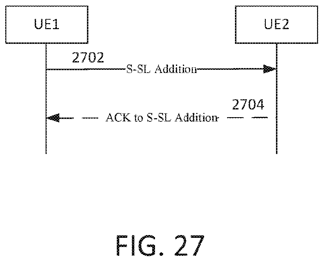

Turning to FIG. 27, an example of how an S-SL carrier is added in an embodiment will now be described. At step 2702, UE1 transmits an S-SL addition message to UE2. The S-SL addition message includes one or more of the parameters discussed previously with respect to SL CA configuration information. At optional step 2704, UE2 acknowledges the S-SL addition message.

In an embodiment, when the P-SL and the S-SL have different functions, the P-SL carries the control signaling-e.g., NAS control signaling, PC5 AS control signaling, MAC CE- and S-SL only carries normal data. The NAS control signaling includes things like PC5 discovery related messages and PC5 communication related messages. The PC5 AS control signaling includes RRC layer control signaling, such PC5 DRX configuration messages and PC5 general control signaling. The MAC CEs are MAC layer control elements, e.g., SL BSR and SL PHR

In this case, when the P-SL suffers link failure, all the NAS control signaling/AS control signaling/MAC CE would be no longer transmitted.

When only one CC is maintained between UEs, this CC is naturally made to carry all the NAS control signaling/AS control signaling/MAC CE, etc. In an embodiment, after one or multiple second CC(s) are established, all the CCs will be treated equally and all the control signalings are free to transmit on either CC.

It should be understood that the embodiments described herein should be considered in a descriptive sense only and not for purposes of limitation.

## Claims

1. A method for carrying out wireless device-to-device communication, the method comprising:
a first user equipment transmitting a sidelink carrier aggregation configuration to a second user equipment; and
the first user equipment communicating directly with the second user equipment on a plurality of sidelink carriers in accordance with the sidelink carrier aggregation configuration,
wherein the method further comprises:
the first user equipment transmitting, to the second user equipment, an inquiry regarding a capability of the second user equipment to communication using direct device-to-device communication with carrier aggregation; and
the first user equipment receiving, in response to the inquiry, information from the second user equipment regarding the capability.

2. The method of claim 1, wherein transmitting a sidelink carrier aggregation configuration to a second user equipment comprises transmitting the sidelink carrier aggregation configuration via a base station to the second user equipment, or
wherein transmitting a sidelink carrier aggregation configuration to a second user equipment comprises transmitting the sidelink carrier aggregation configuration directly to the second user equipment, and/or
wherein the sidelink carrier aggregation configuration includes at least one of a set of carrier frequencies and deactivation timer information, and/or
wherein the sidelink carrier aggregation configuration comprises one or more of sidelink carrier addition information, sidelink carrier change information, sidelink carrier release information, and/or
wherein the plurality of sidelink carriers comprises a plurality of carrier components, and
the sidelink carrier aggregation configuration further comprises, for each of the plurality of component carriers, one or more of a receive/transmit indicator, a sidelink indicator, a carrier component aggregation type, a vehicle-to-anything service type, a synchronization type, sidelink index, sidelink carrier index, sidelink transmission resource pool information, sidelink reception resource pool information, and validation time of the aggregation configuration.

3. The method of claim 1 or 2, further comprising transmitting, to a base station, a notification message that includes one or more of information regarding the frequencies of the one or more carriers, information regarding a deactivation timer, and an identifier of the second user equipment, a communication destination identifier, and an identifier of a group of user equipments, and
wherein the plurality of sidelink carriers preferably comprises a plurality of carrier components, and
the notification message preferably further comprises, for each of the plurality of component carriers, one or more of a receive/transmit indicator, a sidelink indicator, a carrier component aggregation type, a vehicle-to-anything service type, a synchronization type, sidelink index, sidelink carrier index, sidelink transmission resource pool information, sidelink reception resource pool information, and validation time of the aggregation configuration.

4. The method of any one of the preceding claims, wherein the information regarding the capability includes one or more of sidelink band combination, whether transmit is supported on a sidelink carrier, and whether receive is supported on the sidelink carrier, and
wherein the sidelink band combination preferably includes a list of carriers on which the user equipment can operate simultaneously and each carrier's bandwidth.

5. A method for carrying out wireless device-to-device communication, the method comprising:
a second user equipment receiving a sidelink carrier aggregation configuration from a first user equipment; and
the second user equipment communicating directly with the first user equipment on a plurality of sidelink carriers in accordance with the sidelink carrier aggregation configuration,
wherein the method further comprises:
the second user equipment receiving, from the first user equipment, an inquiry regarding a capability of the second user equipment to communicate using direct device-to-device communication with carrier aggregation; and
the second user equipment transmitting, in response to the inquiry, information to the first user equipment regarding the capability.

6. The method of claim 5, wherein receiving a sidelink carrier aggregation configuration from a first user equipment comprises receiving the sidelink carrier aggregation configuration via a base station from the first user equipment, or
wherein receiving a sidelink carrier aggregation configuration from a first user equipment comprises receiving the sidelink carrier aggregation configuration directly from the first user equipment, and/or
wherein the sidelink carrier aggregation configuration comprises at least one of a set of carrier frequencies and deactivation timer information, and/or
wherein the sidelink carrier aggregation configuration comprises one or more of sidelink carrier addition information, sidelink carrier change information, sidelink carrier release information, and/or
wherein the plurality of sidelink carriers comprises a plurality of carrier components, and
the sidelink carrier aggregation configuration further comprises, for each of the plurality of component carriers, one or more of a receive/transmit indicator, a sidelink indicator, a carrier component aggregation type, a vehicle-to-anything service type, a synchronization type, sidelink index, sidelink carrier index, sidelink transmission resource pool information, sidelink reception resource pool information, and validation time of the aggregation configuration.

7. The method of claim 5 or 6, wherein the information regarding the capability includes one or more of sidelink band combination.

8. A method for carrying out wireless device-to-device communication, the method comprising:
a base station receiving, from a first user equipment, a sidelink carrier aggregation configuration; and
the base station transmitting the sidelink carrier aggregation configuration to a second user equipment,
wherein the sidelink carrier aggregation configuration includes sidelink carrier aggregation capability information.

9. The method of claim 8, wherein the sidelink carrier aggregation configuration comprises at least one of a set of carrier frequencies and deactivation timer information, and/or wherein
the plurality of sidelink carriers comprises a plurality of carrier components, and
the sidelink carrier aggregation configuration further comprises, for each of the plurality of component carriers, one or more of a receive/transmit indicator, a sidelink indicator, a carrier component aggregation type, a vehicle-to-anything service type, a synchronization type, sidelink index, sidelink carrier index, sidelink transmission resource pool information, sidelink reception resource pool information, and validation time of the aggregation configuration.

10. The method of claim 8 or 9,
wherein transmitting the sidelink carrier aggregation configuration to a second user equipment comprises broadcasting the sidelink carrier aggregation information to a plurality of user equipments, including the second user equipment, and
wherein the sidelink carrier aggregation configuration information preferably includes one or more of carrier frequency information, information regarding vehicle-to-anything service type supported on a sidelink carrier, sidelink synchronization information, carrier bandwidth information, time division duplex configuration, and sidelink resource pool information.

11. A method for carrying out wireless device-to-device communication, the method comprising:
during a handover of a user equipment from a source base station to a target base station, the target base station receiving a sidelink carrier aggregation configuration of the user equipment; and
the target base station transmitting the sidelink carrier aggregation configuration to the user equipment,
wherein the sidelink carrier aggregation configuration includes sidelink carrier aggregation capability information.

12. The method of claim 11,
further comprising:
receiving a handover request from the source base station;
reconfiguring transmit or receive component carriers used by the user equipment for sidelink carrier aggregation; and
including information regarding the reconfigured transmit or receive component carriers in the sidelink carrier aggregation configuration transmitted to the user equipment, and/or
further comprising configuring one or more of: which resource allocation mode is to be used on each component carrier, a transmit or receive resource pool configuration of each component carrier, and whether cross carrier scheduling is supported.

13. A user equipment configured to carry out the method of any one of claims 1 to 12.

14. A base station configured to carry out any one of claims 8 to 12.

15. A non-transitory computer-readable medium having stored thereon computer executable instructions for carrying out the method of any one of claims 1 to 12.

## Patentansprüche

1. Verfahren zum Ausführen einer drahtlosen Gerät-zu-Gerät-Kommunikation, wobei das Verfahren aufweist:
ein erstes Benutzergerät sendet eine Sidelink-Trägeraggregations-Konfiguration an ein zweites Benutzergerät; und
das erste Benutzergerät kommuniziert direkt mit dem zweiten Benutzergerät auf mehreren Sidelink-Trägern gemäß der Sidelink-Trägeraggregations-Konfiguration,
wobei das Verfahren ferner aufweist:
das erste Benutzergerät sendet an das zweite Benutzergerät eine Anfrage bezüglich einer Fähigkeit des zweiten Benutzergeräts zur Kommunikation unter Verwendung direkter Gerät-zu-Gerät-Kommunikation mit Trägeraggregation; und
das erste Benutzergerät empfängt als Antwort auf die Anfrage Informationen vom zweiten Benutzergerät bezüglich der Fähigkeit.

2. Verfahren nach Anspruch 1, wobei das Senden einer Sidelink-Trägeraggregations-Konfiguration an ein zweites Benutzergerät das Senden der Sidelink-Trägeraggregations-Konfiguration über eine Basisstation an das zweite Benutzergerät aufweist, oder
wobei das Senden einer Sidelink-Trägeraggregations-Konfiguration an ein zweites Benutzergerät das Senden der Sidelink-Trägeraggregations-Konfiguration direkt an das zweite Benutzergerät aufweist, und/oder
wobei die Sidelink-Trägeraggregations-Konfiguration mindestens einen Satz von Trägerfrequenzen und Deaktivierungszeitgeber-Informationen enthält, und/oder wobei die Sidelink-Trägeraggregations-Konfiguration eine oder mehrere von Sidelink-Trägerhinzufügungs-Informationen, Sidelink-Trägerwechselinformationen, Sidelink-Trägerfreigabe-Informationen aufweist, und/oder
wobei die mehreren Sidelink-Träger mehrere Trägerkomponenten aufweisen, und
die Sidelink-Träger-Aggregationskonfiguration ferner für jeden der mehreren Komponententräger eines oder mehreres aufweist von: einem Empfangs-/Sende-Indikator, einem Sidelink-Indikator, einem Trägerkomponenten-Aggregationstyp, einem Vehicle-to-Anything-Diensttyp, einem Synchronisationstyp, einem Sidelink-Index, einem Sidelink-Trägerindex, Sidelink-Sende-Ressourcenpool-Informationen, Sidelink-Empfangs-Ressourcenpool-Informationen und eine Validierungszeit der Aggregationskonfiguration.

3. Verfahren nach Anspruch 1 oder 2, das ferner das Senden einer Benachrichtigungsnachricht an eine Basisstation aufweist, die eines oder mehreres enthält von: Informationen bezüglich der Frequenzen des einen oder der mehreren Träger, Informationen bezüglich eines Deaktivierungszeitgebers und eine Kennung des zweiten Benutzergeräts, eine Kommunikationszielkennung und eine Kennung einer Gruppe von Benutzergeräten, und
wobei die mehreren Sidelink-Träger vorzugsweise mehrere Trägerkomponenten aufweisen, und
die Benachrichtigungsnachricht ferner für jeden der mehreren Komponententräger eines oder mehreres aufweist von: einem Empfangs-/Sende-Indikator, einem Sidelink-Indikator, einem Trägerkomponenten-Aggregationstyp, einem Vehicle-to-Anything-Diensttyp, einem Synchronisationstyp, einem Sidelink-Index, einem Sidelink-Trägerindex, Sidelink-Sende-Ressourcenpool-Informationen, Sidelink-EmpfangsRessourcenpool-Informationen und eine Validierungszeit der Aggregationskonfiguration.

4. Verfahren nach einem der vorhergehenden Ansprüche, wobei die Information bezüglich der Fähigkeit eines oder mehreres enthält von: einer Sidelink-Bandkombination, ob das Senden auf einem Sidelink-Träger unterstützt wird, und ob der Empfang auf dem Sidelink-Träger unterstützt wird, und
wobei die Sidelink-Bandkombination vorzugsweise eine Liste von Trägern, auf denen das Benutzergerät gleichzeitig arbeiten kann, und die Bandbreite jedes Trägers enthält.

5. Verfahren zum Ausführen einer drahtlosen Gerät-zu-Gerät-Kommunikation, wobei das Verfahren aufweist:
ein zweites Benutzergerät empfängt eine Sidelink-Trägeraggregations-Konfiguration von einem ersten Benutzergerät; und
das zweite Benutzergerät kommuniziert direkt mit dem ersten Benutzergerät auf mehreren Sidelink-Trägern gemäß der Sidelink-Trägeraggregations-Konfiguration, wobei das Verfahren ferner aufweist:
das zweite Benutzergerät empfängt vom ersten Benutzergerät eine Anfrage bezüglich einer Fähigkeit des zweiten Benutzergeräts, unter Verwendung direkter Gerät-zu-Gerät-Kommunikation mit Trägeraggregation zu kommunizieren; und
das zweite Benutzergerät sendet als Antwort auf die Anfrage Informationen an das erste Benutzergerät bezüglich der Fähigkeit.

6. Verfahren nach Anspruch 5, wobei das Empfangen einer Sidelink-Trägeraggregations-Konfiguration von einem ersten Benutzergerät das Empfangen der Sidelink-Trägeraggregations-Konfiguration über eine Basisstation vom ersten Benutzergerät aufweist, oder
wobei das Empfangen einer Sidelink-Trägeraggregations-Konfiguration von einem ersten Benutzergerät das Empfangen der Sidelink-Trägeraggregations-Konfiguration direkt vom ersten Benutzergerät aufweist, und/oder
wobei die Sidelink-Trägeraggregations-Konfiguration mindestens eines von einem Satz von Trägerfrequenzen und Deaktivierungszeitgeber-Informationen aufweist, und/oder wobei die Sidelink-Trägeraggregations-Konfiguration eine oder mehrere von Sidelink-Trägerhinzufügungs-Informationen, Sidelink-Trägerwechselinformationen, Sidelink-Trägerfreigabe-Informationen aufweist, und/oder
wobei die mehreren Sidelink-Träger mehrere Trägerkomponenten aufweisen, und
die Sidelink-Träger-Aggregationskonfiguration ferner für jeden der mehreren Komponententräger eines oder mehreres aufweist von: einem Empfangs-/Sende-Indikator, einem Sidelink-Indikator, einem Trägerkomponenten-Aggregationstyp, einem Vehicle-to-Anything-Diensttyp, einem Synchronisationstyp, einem Sidelink-Index, einem Sidelink-Trägerindex, Sidelink-Sende-Ressourcenpool-Informationen, Sidelink-Empfangs-Ressourcenpool-Informationen und eine Validierungszeit der Aggregationskonfiguration.

7. Verfahren nach Anspruch 5 oder 6, wobei die Informationen bezüglich der Fähigkeit eine oder mehrere Sidelink-Bandkombinationen umfassen.

8. Verfahren zum Ausführen einer drahtlosen Gerät-zu-Gerät-Kommunikation, wobei das Verfahren aufweist:
eine Basisstation empfängt von einem ersten Benutzergerät eine Sidelink-Trägeraggregations-Konfiguration; und
die Basisstation sendet die Sidelink-Trägeraggregations-Konfiguration an ein zweites Benutzergerät,
wobei die Sidelink-Trägeraggregations-Konfiguration Informationen zur Sidelink-Trägeraggregationsfähigkeit enthält.

9. Verfahren nach Anspruch 8, wobei die Sidelink-Trägeraggregations-Konfiguration mindestens eines von einem Satz von Trägerfrequenzen und Deaktivierungszeitgeber-Informationen aufweist, und/oder wobei
die mehreren Sidelink-Träger mehrere Trägerkomponenten aufweisen, und
die Sidelink-Trägeraggregations-Konfiguration ferner für jeden der mehreren Komponententräger eines oder mehreres aufweist von: einem Empfangs-/Sende-Indikator, einem Sidelink-Indikator, einem Trägerkomponenten-Aggregationstyp, einem Vehicle-to-Anything-Diensttyp, einem Synchronisationstyp, einem Sidelink-Index, einem Sidelink-Trägerindex, Sidelink-Sende-Ressourcenpool-Informationen, Sidelink-Empfangs-Ressourcenpool-Informationen und eine Validierungszeit der Aggregationskonfiguration.

10. Verfahren nach Anspruch 8 oder 9,
wobei das Senden der Sidelink-Trägeraggregations-Konfiguration an ein zweites Benutzergerät das Rundsenden der Sidelink-Trägeraggregations-Informationen an mehrere Benutzergeräte, einschließlich der zweiten Benutzergerät, aufweist, und
wobei die Sidelink-Trägeraggregations-Konfigurationsinformationen vorzugsweise eine oder mehrere Trägerfrequenzinformationen, Informationen bezüglich des Vehicle-to-Anything-Diensttyps, der auf einem Sidelink-Träger unterstützt wird, Sidelink-Synchronisationsinformationen, Trägerbandbreiteninformationen, Zeitduplexkonfiguration und Sidelink-Ressourcenpool-Informationen enthalten.

11. Verfahren zum Ausführen einer drahtlosen Gerät-zu-Gerät-Kommunikation, wobei das Verfahren aufweist:
während einer Übergabe eines Benutzergeräts von einer Quellbasisstation zu einer Zielbasisstation empfängt die Zielbasisstation eine Sidelink-Trägeraggregations-Konfiguration des Benutzergeräts; und
die Zielbasisstation sendet die Sidelink-Trägeraggregations-Konfiguration an das Benutzergerät,
wobei die Sidelink-Trägeraggregations-Konfiguration Informationen zur Sidelink-Trägeraggregationsfähigkeit enthält.

12. Verfahren nach Anspruch 11, das ferner aufweist:
Empfangen einer Übergabeanforderung von der Quellenbasisstation;
Rekonfigurieren von Sende- oder Empfangskomponententrägern, die vom Benutzergerät für die Sidelink-Trägeraggregation verwendet werden; und
Einfügen von Informationen bezüglich der rekonfigurierten Sende- oder Empfangskomponententräger in die an das Benutzergerät gesendete Sidelink-Trägeraggregations-Konfiguration, und/oder
das ferner das Konfigurieren eines oder mehrerer aufweist von: welcher Ressourcenzuweisungsmodus auf jedem Komponententräger zu verwenden ist, eine Sende- oder Empfangsressourcenpool-Konfiguration jedes Komponententrägers, und ob trägerübergreifendes Scheduling unterstützt wird.

13. Benutzergerät, das konfiguriert ist, das Verfahren nach einem der Ansprüche 1 bis 12 auszuführen.

14. Basisstation, die konfiguriert ist, einen der Ansprüche 8 bis 12 auszuführen.

15. Nichtflüchtiges computerlesbares Medium, auf dem computerausführbare Anweisungen zum Ausführen des Verfahrens nach einem der Ansprüche 1 bis 12 gespeichert sind.

## Revendications

1. Procédé d'exécution d'une communication sans fil entre appareils, ledit procédé comprenant :
la transmission par un premier équipement utilisateur d'une configuration d'agrégation de porteuses de liaison latérale à un deuxième équipement utilisateur ; et
la communication directe du premier équipement utilisateur avec le deuxième équipement utilisateur sur une pluralité de porteuses de liaison latérale conformément à la configuration d'agrégation de porteuses de liaison latérale,
ledit procédé comprenant en outre :
la transmission par le premier équipement utilisateur au deuxième équipement utilisateur d'une demande relative à la capacité du deuxième équipement utilisateur à communiquer au moyen d'une communication directe entre appareils avec agrégation de porteuses ; et
la réception par le premier équipement utilisateur, en réponse à la demande, d'informations relatives à la capacité du deuxième équipement utilisateur.

2. Procédé selon la revendication 1, où la transmission d'une configuration d'agrégation de porteuses de liaison latérale à un deuxième équipement utilisateur comprend la transmission de la configuration d'agrégation de porteuses de liaison latérale par l'intermédiaire d'une station de base au deuxième équipement utilisateur, ou
où la transmission d'une configuration d'agrégation de porteuses de liaison latérale à un deuxième équipement utilisateur comprend la transmission de la configuration d'agrégation de porteuses de liaison latérale directement au deuxième équipement utilisateur, et/ou
où la configuration d'agrégation de porteuses de liaison latérale comprend un ensemble de fréquences de porteuses et/ou une information de temporisation de désactivation, et/ou où la configuration d'agrégation de porteuses de liaison latérale comprend une ou plusieurs informations d'ajout de porteuse de liaison latérale, de changement de porteuse de liaison latérale, de libération de porteuse de liaison latérale, et/ou où la pluralité de porteuses de liaison latérale comprend une pluralité de composantes de porteuse, et
la configuration d'agrégation de porteuses de liaison latérale comprend en outre, pour chacune de la pluralité de porteuses composantes, un ou plusieurs des éléments suivants :
un indicateur de réception/émission, un indicateur de liaison latérale, un type d'agrégation de composantes de porteuse, un type de service de véhicule vers un récepteur quelconque,
un type de synchronisation, un indice de liaison latérale, un indice de porteuse de liaison latérale, une information de pool de ressources de transmission de liaison latérale, une information de pool de ressources de réception de liaison latérale, et le moment de validation de la configuration d'agrégation.

3. Procédé selon la revendication 1 ou la revendication 2, comprenant en outre la transmission, à une station de base, d'un message de notification contenant une ou plusieurs des informations relatives aux fréquences de la ou des porteuses, des informations relatives à un temporisateur de désactivation, et un identifiant du deuxième équipement utilisateur, un identifiant de destination de communication, et un identifiant d'un groupe d'équipements utilisateurs, et
où la pluralité de porteuses de liaison latérale comprend préférentiellement une pluralité de composantes de porteuse, et
le message de notification comprend en outre préférentiellement, pour chacune de la pluralité de porteuses composantes, un ou plusieurs des éléments suivants : un indicateur de réception/émission, un indicateur de liaison latérale, un type d'agrégation de composantes de porteuse, un type de service de véhicule vers un récepteur quelconque, un type de synchronisation, un indice de liaison latérale, un indice de porteuse de liaison latérale, une information de pool de ressources de transmission de liaison latérale, une information de pool de ressources de réception de liaison latérale, et le moment de validation de la configuration d'agrégation.

4. Procédé selon l'une des revendications précédentes, où les informations relatives à la capacité comprennent une ou plusieurs combinaisons de bandes de liaison latérale, si la transmission est assistée sur une porteuse de liaison latérale et si la réception est assistée sur la porteuse de liaison latérale, et
où la combinaison de bandes de liaison latérale comprend préférentiellement une liste de porteuses sur lesquelles l'équipement utilisateur peut fonctionner simultanément et la largeur de bande de chaque porteuse.

5. Procédé d'exécution d'une communication sans fil entre appareils, ledit procédé comprenant :
la réception par un deuxième équipement utilisateur d'une configuration d'agrégation de porteuses de liaison latérale d'un premier équipement utilisateur ; et
la communication directe du deuxième équipement utilisateur avec le premier équipement utilisateur sur une pluralité de porteuses de liaison latérale conformément à la configuration d'agrégation de porteuses de liaison latérale,
ledit procédé comprenant en outre :
la réception par le deuxième équipement utilisateur en provenance du premier équipement utilisateur d'une demande relative à la capacité du deuxième équipement utilisateur à communiquer au moyen d'une communication directe entre appareils avec agrégation de porteuses ; et
la transmission par le deuxième équipement utilisateur, en réponse à la demande, d'informations relatives à la capacité au premier équipement utilisateur.

6. Procédé selon la revendication 5, où la réception d'une configuration d'agrégation de porteuses de liaison latérale d'un premier équipement utilisateur comprend la réception de la configuration d'agrégation de porteuses de liaison latérale par l'intermédiaire d'une station de base du premier équipement utilisateur, ou
où la réception d'une configuration d'agrégation de porteuses de liaison latérale en provenance d'un premier équipement utilisateur comprend la réception de la configuration d'agrégation de porteuses de liaison latérale directement en provenance du premier équipement utilisateur, et/ou
où la configuration d'agrégation de porteuses de liaison latérale comprend un ensemble de fréquences de porteuses et/ou une information de temporisation de désactivation, et/ou où la configuration d'agrégation de porteuses de liaison latérale comprend une ou plusieurs informations d'ajout de porteuse de liaison latérale, de changement de porteuse de liaison latérale, de libération de porteuse de liaison latérale, et/ou où la pluralité de porteuses de liaison latérale comprend une pluralité de composantes de porteuse, et
la configuration d'agrégation de porteuses de liaison latérale comprend en outre, pour chacune de la pluralité de porteuses composantes, un ou plusieurs des éléments suivants : un indicateur de réception/émission, un indicateur de liaison latérale, un type d'agrégation de composantes de porteuse, un type de service de véhicule vers un récepteur quelconque, un type de synchronisation, un indice de liaison latérale, un indice de porteuse de liaison latérale, une information de pool de ressources de transmission de liaison latérale, une information de pool de ressources de réception de liaison latérale, et le moment de validation de la configuration d'agrégation.

7. Procédé selon la revendication 5 ou la revendication 6, où les informations relatives à la capacité comprennent une ou plusieurs combinaisons de bandes de liaison latérale.

8. Procédé d'exécution d'une communication sans fil entre appareils, ledit procédé comprenant :
la réception par une station de base, en provenance d'un premier équipement utilisateur, d'une configuration d'agrégation de porteuses de liaison latérale ; et
la transmission par la station de base de la configuration d'agrégation de porteuses de liaison latérale à un deuxième équipement utilisateur,
la configuration d'agrégation de porteuses de liaison latérale comprenant des informations de capacité d'agrégation de porteuses de liaison latérale.

9. Procédé selon la revendication 8, où la configuration d'agrégation de porteuses de liaison latérale comprend un ensemble de fréquences de porteuses et/ou une information de temporisation de désactivation, et/ou
où la pluralité de porteuses de liaison latérale comprend une pluralité de composantes de porteuse, et
la configuration d'agrégation de porteuses de liaison latérale comprend en outre, pour chacune de la pluralité de porteuses composantes, un ou plusieurs des éléments suivants : un indicateur de réception/émission, un indicateur de liaison latérale, un type d'agrégation de composantes de porteuse, un type de service de véhicule vers un récepteur quelconque, un type de synchronisation, un indice de liaison latérale, un indice de porteuse de liaison latérale, une information de pool de ressources de transmission de liaison latérale, une information de pool de ressources de réception de liaison latérale, et le moment de validation de la configuration d'agrégation.

10. Procédé selon la revendication 8 ou la revendication 9,
où la transmission de la configuration d'agrégation de porteuse de liaison latérale à un deuxième équipement utilisateur comprend la diffusion des informations d'agrégation de porteuse de liaison latérale vers une pluralité d'équipements utilisateurs, incluant le deuxième équipement utilisateur, et
où les informations de configuration d'agrégation de porteuses de liaison latérale comprennent préférentiellement un ou plusieurs des éléments suivants : une information relative aux fréquences de porteuses, une information sur le type de service de véhicule vers un récepteur quelconque, assisté sur une porteuse de liaison latérale, une information de synchronisation de liaison latérale, une information sur la largeur de bande de porteuse, une configuration de duplexage par répartition temporelle et une information de pool de ressources de liaison latérale.

11. Procédé d'exécution d'une communication sans fil entre appareils, ledit procédé comprenant :
pendant un transfert d'un équipement utilisateur d'une station de base source à une station de base cible, la réception par la station de base cible d'une configuration d'agrégation de porteuses de liaison latérale de l'équipement utilisateur ; et
la transmission par la station de base cible de la configuration d'agrégation de porteuses de liaison latérale à l'équipement utilisateur,
la configuration d'agrégation de porteuses de liaison latérale comprenant des informations de capacité d'agrégation de porteuses de liaison latérale.

12. Procédé selon la revendication 11, comprenant en outre :
la réception d'une demande de transfert de la station de base source ;
la reconfiguration de porteuses composantes d'émission ou de réception utilisées par l'équipement utilisateur pour l'agrégation de porteuses de liaison latérale ; et
l'inclusion d'informations relatives aux porteuses composantes d'émission ou de réception reconfigurées dans la configuration d'agrégation de porteuses de liaison latérale transmise à l'équipement utilisateur, et/ou
comprenant en outre la configuration d'un ou plusieurs des éléments suivants : le mode d'attribution des ressources à utiliser sur chaque porteuse composante, une configuration de pool de ressources d'émission ou de réception de chaque porteuse composante, et si la programmation de porteuses croisées est assisté.

13. Équipement utilisateur, prévu pour exécuter le procédé selon l'une des revendications 1 à 12.

14. Station de base, prévue pour exécuter le procédé selon l'une des revendications 8 à 12.

15. Support non transitoire lisible par ordinateur, sur lequel sont stockées des instructions exécutables par ordinateur pour la mise en oeuvre du procédé selon l'une des revendications 1 à 12.
